# EUROPEAN PATENT APPLICATION

(11) **EP 1 612 562 A2**
(43) Date of publication of application: **04.01.2006**
(21) Application number: 05252481.6
(22) Date of filing: 20.04.2005
(51) Int. Cl.: G01N 35/10

(54) **Constant temperature reservoir for use with volumetric fluid dispensing apparatus**

(30) Priority: 28.06.2004 US 879568
(71) Applicant: MILLIPORE CORPORATION, Billerica, Massachusetts 01821 (US)
(72) Inventor: Belongia, Brett M., North Andover MA 01845 (US)
(74) Representative: Gambell, Derek

(57) **Abstract**

A system and method for controlling the temperature of the fluid in a volumetric dispensing apparatus, without the need for a controlled ambient environment. The reservoir used to hold the fluid prior to dispensing is maintained at a constant temperature through the use of a temperature-controlled surround, such as a water jacket. This ensures uniform fluid properties, such as viscosity and density, thereby guaranteeing that accurate volumes will be dispensed. Methods for controlling the temperature within the encased reservoir are also disclosed.

## Description

### BACKGROUND OF THE INVENTION

There are various types of dispensing apparatuses for filling bottles and other containers. One such type is positive displacement fillers. These devices employ a cylinder and piston arrangement, which contacts and dispenses the fluid. Typically, fluid enters the cylinder as the piston is in its upward motion, which creates a vacuum into which the fluid enters through an inlet port. The downward motion of the piston expels the fluid through an outlet port. The process can then be repeated. Other embodiments of positive displacement fillers also exist, such as those using rotary pumps.

While these fillers are popular due to their speed and accuracy, their application is limited, especially in the pharmaceutical field. These devices are very difficult to clean, and typically must be disassembled to be sterilized. Also, since the device actually contacts the fluid, contamination is a constant risk.

Another type of dispensing apparatus is the time/pressure filler. These typically include a fluid chamber that is held under constant pressure. Fluid is dispensed through a discharge line, which is controlled by a pinch type valve. The valve is opened for a precise amount of time to dispense fluid. Since the pressure is held constant, and the time interval is constant, the amount of fluid dispensed should also be constant. However, due to variances in the equipment and deformation of the discharge tube over time, these systems are less accurate than required for many applications.

A third type of dispensing apparatus is the volumetric dispensing apparatus, as shown in U.S. Patent 5,480,063, which is hereby incorporated by reference. These devices measure and dispense a predetermined volume of fluid. These systems are highly accurate and avoid problems of contamination common with positive displacement apparatus, since there are no moving parts in contact with the fluid.

These systems are well suited for use in the pharmaceutical field, due to their accuracy and no risk of contamination. However, they do have shortcomings. They are highly accurate, as long as the viscosity of the fluid remains constant throughout the dispensing period. If the viscosity of the fluid changes, the volume dispenses may vary. While this variation may only be 1%, this may be unacceptable in the pharmaceutical field.

In typical usage, these apparatus are kept in a controlled environment, such as a "clean room", which maintains a relatively constant temperature and humidity. In so doing, the viscosity of the fluid also remains constant, thereby yielding highly accurate results. In addition, many pharmaceutical fluids need to be processed at specific temperatures or temperature ranges to maximize their effectiveness. This is also accomplished by the use of a constant environmental setting.

However, setting up and maintaining a "clean room" can be expensive and impractical. Some facilities may not have the required space or equipment to install such an environment. Others may find that the cost of such an environment is prohibitive. However, without this controlled temperature environment, the two shortcomings cited above, i.e. variable viscosity and de-optimized effectiveness of the pharmaceutical fluid, become apparent.

### SUMMARY OF THE INVENTION

The problems of the prior art have been overcome by the present invention, which provides a system and method for controlling the temperature of the fluid in a volumetric dispensing apparatus, without the need for a controlled ambient environment. The reservoir used to hold the fluid prior to dispensing is maintained at a constant temperature through the use of a temperature-controlled surround, such as a water jacket. This ensures uniform fluid properties, such as viscosity and density, thereby guaranteeing that accurate volumes will be dispensed. Methods for controlling the temperature within the encased reservoir are also disclosed.

### BRIEF DESCRIPTION OF THE DRAWINGS

Figure 1 is a schematic diagram illustrating the pharmaceutical fluid dispensing system of the prior art;
Figure 2 is a schematic diagram illustrating a first embodiment of the present invention; and
Figure 3 is a schematic diagram illustrating a second embodiment of the present invention.

### DETAILED DESCRIPTION OF THE INVENTION

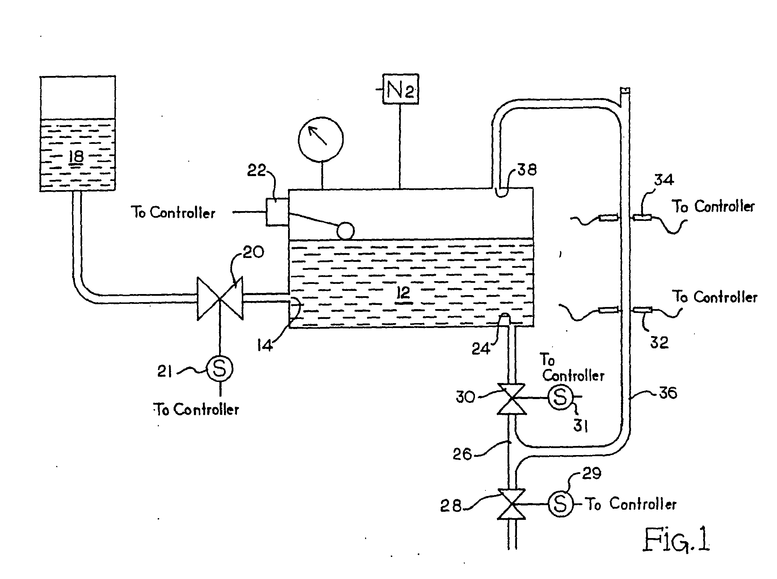

Pharmaceutical fluid dispensing systems require extremely tight tolerances to dispense appropriate amounts of fluid. Figure 1 is a schematic diagram illustrating such a pharmaceutical fluid dispensing system of the prior art.

A reservoir 12 holds the fluid to be dispensed by the system. To minimize variation in the volume dispensed, the fluid is held under constant pressure. Typically, there is no venting of these systems. Rather, an inert gas, such as nitrogen can be used to fill the remaining capacity in the reservoir to prevent any reaction between the gas and the fluid. As liquid is dispensed from the reservoir, it is replenished from fluid source 18. Reservoir level control 22 is used to monitor the level of fluid in reservoir 12. When the level drops below a threshold, reservoir level control 22 signals to the controller (not shown) that additional fluid must be added. The controller signals supply solenoid 21 to open supply valve 20. Once open, fluid is free to move from the fluid source 18 to the reservoir 12 through supply port 14. When the proper fluid level in the reservoir is reached, the reservoir level control 22 again signals the controller, which then causes the solenoid 21 and supply valve 20 to close. In this way, the fluid in the reservoir 12 is maintained under constant pressure.

Reservoir 12 is in communication with drain line 26 through drain port 24 and with fill tube 36 through fill vent 38. When the controller signals the fill solenoid 31 to open fill valve 30, fluid from the reservoir flows into drain line 26 and up into fill tube 36. Located along fill tube 36 are several sensors, preferably optical sensors, which can detect the presence of fluid in the fill tube 36. The upper level sensor 34 is used to set the upper fluid level in the fill tube, while lower level sensor 32 is used to set the lower fluid level. Operationally, when fill valve 30 is opened, fluid enters drain line 26 and fill tube 36. Once the fluid reaches the level of the upper level sensor 34, the sensor signals the controller to close the fill valve. As the fluid exits the reservoir and fills the fill tube 36, the gas previously in the fill tube is pushed back into the reservoir, since the fill tube forms a closed loop with the reservoir 12.

Once the fluid has reached the level of the upper level sensor 34 and the fill valve is closed, the controller then opens the drain valve 28 by signaling drain solenoid 29 to open. While the drain valve 28 is open, the fluid exits the fill tube through drain line 26 and drain valve 28. Once the level of the fluid in the fill tube reaches the lower level sensor 32, the controller is signaled to close the drain valve 28 by actuating drain solenoid 29. In this way, a precise amount of fluid, equal to the volume of the fill tube between the upper and lower level sensors, is dispensed.

This process then continues, with the reservoir 12 being filled by fluid source 18 through supply valve 20 and being emptied by opening fill valve 30 and drain valve 28. This process is highly effective in dispensing precise amounts of liquids. Furthermore, there are no moving parts in communication with the fluid, thereby eliminating mechanical wear and contamination of the fluid.

While this system is highly effective, there are limitations to its operation with respect to pharmaceutical products. First, pharmaceutical products must be dispensed with great accuracy. Variations in volume of even 1% may be unacceptable. Fluid properties, such as viscosity and density can change as a function of the fluid temperature. Therefore, in order to guarantee accurate dispersion of a specific volume of fluid, the fluid must be maintained at a constant temperature while being processed. Second, many pharmaceutical products must be processed within a given temperature range, or their effectiveness may be compromised. This temperature can vary, depending on the product, and typically is between 4° and 37° C.

However, as shown in Figure 1, the nature of the dispensing system is that the fluid must be kept in the reservoir for proper operation. Therefore, fluid can remain in the reservoir for extended periods of time, depending on the usage of the dispensing system. In an extreme situation, the system may only be used during one work shift during a standard five-day workweek. Fluid in the reservoir at the end of one day's work shift will remain there until the start of the next day's work shift. This period of time can be even longer when the fluid is left in the reservoir during a weekend. More typically, fluid will remain in the reservoir during periods of inactivity during the day, such as shift changes, and coffee and lunch breaks.

Therefore, either the fluid within the reservoir must be used quickly in order to insure that it is at the proper temperature, or the ambient environment around the reservoir must be kept at the desired temperature. One method of achieving this result is to keep the dispensing system in a controlled environment, such as a temperature-controlled clean room. In actual practice, neither of these options may be possible, or economically feasible. For example, some fluids must be kept refrigerated. If the temperature-controlled environment is not at the same temperature as the refrigerator, the fluid will undergo temperature changes over time, thereby affecting its properties, such as viscosity and density. Therefore, a mechanism is needed to keep the fluid within the reservoir at the appropriate temperature, even during long periods of system inactivity without requiring the environment surrounding the system to be controlled.

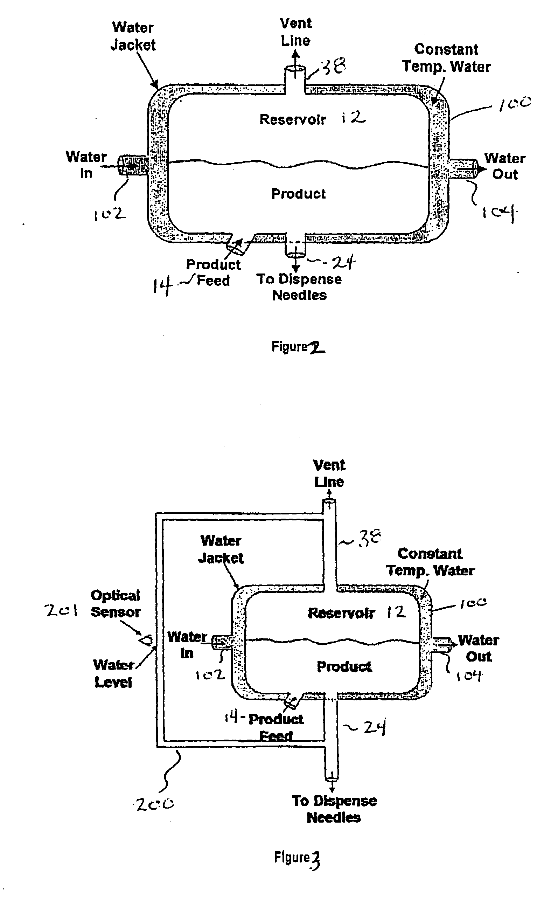

Figure 2 shows an expanded view of a first embodiment of the reservoir of the current invention. Reservoir 12 is partially filled with fluid. As described above, additional fluid enters the reservoir 12 through supply port 14, and exits the reservoir 12 through drain port 24. Fill vent 38 provides a closed loop path from drain port 24.

To maintain the fluid at a constant uniform temperature, a thermally controlled surround, such as a water jacket 100 encases the reservoir 12. The water jacket, preferably made of plastic, has an inlet port 102 and an outlet port 104. Water is maintained at a constant temperature, such as by conventional regulating means outside the fluid jacket (not shown), including heating or cooling, depending on the specific requirements and properties of the pharmaceutical fluid. This regulated water is then circulated through the water jacket 100, entering the jacket through the inlet port 102 and exiting through the outlet port 104.

In the preferred embodiment, the thermally controlled surround encases the entire reservoir, however, in another embodiment, the surround covers a substantial portion of the surface area of the reservoir to ensure proper thermal transfer. Similarly, while a uniform thickness of the surround is preferred, the surround can be designed to have a non-uniform thickness. For example, the surround may contain more water at the bottom than at the top. Optionally, the thermal surround and the reservoir can be fabricated as a single component.

The optimal rate of flow of water through the thermal surround is determined by understanding the thermal transfer characteristics of the reservoir and the surround, as well as the temperature gradient between the water and the ambient environment, the amount of fluid in the reservoir, and the fluid's properties. Typically, a higher flow rate will insure a more uniform temperature for the fluid in the reservoir.

There is a plurality of mechanisms that can be employed to insure that the fluid in the reservoir is at the proper temperature. In one embodiment, heat transfer calculations based on the properties of the fluid in the reservoir, the flow rate of the water, the ambient temperature, and the heat transfer properties of the reservoir and the surround are conducted to determine the appropriate temperature for the water in the thermal surround. In a second embodiment, the temperature of the water circulating in the thermal surround is calculated empirically. In a third embodiment, a temperature sensor, located within the reservoir, supplies information to a controller, which then adjusts the temperature of the water in the thermal surround accordingly.

The use of a water jacket may interfere with the operation of the reservoir level control 22, depending on the type of sensor technology that is used. For example, if a mechanism employing a float is installed in the reservoir, as shown in Figure 1, the use of the water jacket will not interfere with its operation. However, if an optical or capacitance sensor is used as the level control, the water jacket may interfere with proper operation of the sensor unless suitable accommodations are made to the jacket design.

Figure 3 illustrates a second embodiment of the present invention, adapted to permit proper operation of an optical or capacitance sensor in conjunction with the water jacket. A closed loop 200 is in fluid communication with both the fill vent 38 and the drain port 24. The level of fluid in closed loop 200 will be at the same height as that within the reservoir 12. Thus, capacitance or optical sensors 201 can be employed for use with the closed loop to perform the functions currently implemented within the reservoir. Alternatively, closed loop 200 can utilize inlet and outlet ports that are separate from those used for the dispensing of fluid. In either case, the level of fluid in the closed loop will equal that within the reservoir.

While water is the preferred medium used within the water jacket, the invention is not so limited. Any other appropriate fluid, including gases, may be used to produce the required effect, so long as they are relatively inert and are sanctioned by the appropriate government agency (such as the FDA) for use in such systems. Such fluids include, but are not limited to, food grade oils such as corn or canola oils, mineral oils, and the like. Gases may include cooled or heated air, Freon® and Freon®-like refrigerants and the like. (Freon® is a registered trademark of DuPont Corporation.) Accordingly, those skilled in the art will appreciate that the use of the water jacket is merely exemplary and not to be interpreted as limiting the fluid in the jacket to water.

In an alternate embodiment, the temperature of the fluid in the reservoir is electronically controlled. Electrical devices, such as thermistors and thermoelectric coolers (solid state heat pumps), are used to create the temperature-controlled surround. These devices can be placed directly on the reservoir, or alternatively within a surround which encases the reservoir. These devices are in communication with a controller, which regulates the temperature of the fluid in the reservoir by actuating the devices as required.

## Claims

1. An apparatus for dispensing a predetermined volume of a first fluid, where said first fluid is maintained at a predetermined temperature, comprising:
a fluid chamber containing the first fluid to be dispensed;
a temperature-controlled surround encasing said chamber through which a second fluid at a constant temperature is circulated to maintain said first fluid in said chamber at a constant temperature and viscosity;
a fill tube in communication with said chamber and forming a closed loop with said chamber;
a fill valve located in said fill tube to regulate flow of said first fluid into said fill tube;
sensing means for detecting the level of said first fluid in said fill tube;
a discharge valve for dispensing the contents of said fill tube; and
an electronic controller responsive to said sensing means for actuating said fill valve to fill said fill tube and
actuating said drain valve to dispense said first fluid from said fill tube.

2. The apparatus of claim 1, whereby said second fluid is water.

3. The apparatus of claim 1, further comprising a second closed loop in communication with said chamber, said second closed loop further comprising sensing means to detect the level of said first fluid in said second closed loop, which corresponds to level of said first fluid in said chamber.

4. An apparatus for dispensing a predetermined volume of a fluid, where said fluid is maintained at a predetermined temperature, comprising:
a fluid chamber containing the fluid to be dispensed;
electronic means in thermal communication with said fluid jacket adapted to heat said fluid jacket when actuated, thereby maintaining said fluid in said fluid chamber at a constant temperature and viscosity;
a fill tube in communication with said chamber and forming a closed loop with said chamber;
a fill valve located in said fill tube to regulate flow of said fluid into said fill tube;
sensing means for detecting the level of said fluid in said fill tube;
a discharge valve for dispensing the contents of said fill tube; and
an electronic controller responsive to said sensing means for actuating said fill valve to fill said fill tube and
actuating said drain valve to dispense said fluid from said fill tube.

5. The system of claim 4, wherein said electronic means comprises thermistors.
